Europäisches Patentamt

European Patent Office

Office européen des brevets

(19)

(11) Publication number: **0 086 854**
**A1**

(12)

# EUROPEAN PATENT APPLICATION

(21) Application number: **82101226.7**

(22) Date of filing: **18.02.82**

(51) Int. Cl.³: **B 65 G 11/00**

(43) Date of publication of application:
**31.08.83 Bulletin 83/35**

(84) Designated Contracting States:
**BE DE FR IT**

(71) Applicant: **YOSHIDA KOGYO K.K.**
**No. 1 Kanda Izumi-cho Chiyoda-ku**
**Tokyo(JP)**

(72) Inventor: **Seki, Fumio**
**621, Horikawakoizumi-cho**
**Toyama-shi Toyama-ken(JP)**

(74) Representative: **Casalonga, Axel et al,**
**BUREAU D.A. CASALONGA OFFICE JOSSE & PETIT**
**Baaderstrasse 12-14**
**D-8000 München 5(DE)**

(54) Mechanism for detachably connecting a chute to a hopper.

(57) A mechanism, for detachably connecting a chute (14) to a hopper (12) having an outlet (16) for delivering parts (11) therefrom, includes a plug (14a) constituted by one end portion of the chute (14), and a socket (16a) constituted by a free end portion of the outlet port (16) of the hopper (12) for receiving the plug (14a) tightly. A spring-biased ball (19) is carried by a wall (16b) of the socket (16a), and is movable between a projected position in which it projects into the socket (16a), and a retracted position in which it is retracted out of the socket (16a). The plug (14a) has a locking recess (22) for receiving the ball (19) when the plug (14a) is inserted in the socket (16a) in position for correct connection. With this mechanism, the chute (14) can be attached to, or detached from, the hopper (12) with only a single simple snap action.

FIG. 2

EP 0 086 854 A1

- 1 -

MECHANISM FOR DETACHABLY CONNECTING A CHUTE TO A HOPPER

The present invention relates to an apparatus for delivering parts such as hooks or buttons to a garment for attachment thereto, and more particularly to a mechanism for detachably connecting a chute to a hopper in such apparatus.

Apparatus for delivering parts such as hooks or buttons to a garment for attachment thereto, generally comprise a hopper containing the parts and a chute connected to the hopper for guiding the parts from the hopper to a garment. The chute is usually detachable from the hopper for the purpose of cleaning a guide channel of the chute and for replacement by another which may be a suitable one chosen from a plurality of different chutes, depending on the configuration and size of the parts to be delivered. To this end, it is known, by Japanese Utility Model Publication (Kokoku) 51-38412, to detachably connect a chute to a hopper by means of bolt and nut. This bolt-and-nut connection, however, requires loosening the bolt and nut to detach the chute from the hopper and tightening the bolt and nut to attach the chute to the hopper, which is laborious and time-consuming.

According to the invention, there is provided a mechanism for detachably connecting a chute to a hopper having an outlet port for delivering parts therefrom, said mechanism comprising: a plug constituted by one end portion of said chute; a socket constituted by a free end portion of said outlet port of said hopper for receiving said plug tightly; a ball carried by a wall of said socket and movable between a first position in which said ball projects from said wall into said socket, and a second position in which said ball is retracted into said wall out of said socket; a spring normally urging said ball to said first position; and said plug having a locking recess for receiving said ball when said plug is inserted in said socket in position for correct connection.

The present invention seeks to provide an improved mechanism with which a chute can be attached to (detached from) a hopper with only a single simple snap action.

Other objects and advantages will appear from the following description of an example of the invention, when considered in connection with accompanying drawings, and the novel features will be particularly pointed out in the appended claims.

Figure 1 is a front elevational view of a parts delivering apparatus in which a mechanism of the present invention is employed;

Figure 2 is an enlarged detail view showing a portion A of Figure 1, with parts broken away;

Figure 3 is a cross-sectional view taken along line III-III of Figure 2; and

Figure 4 is an enlarged detail cross-sectional view showing a portion B of Figure 1.

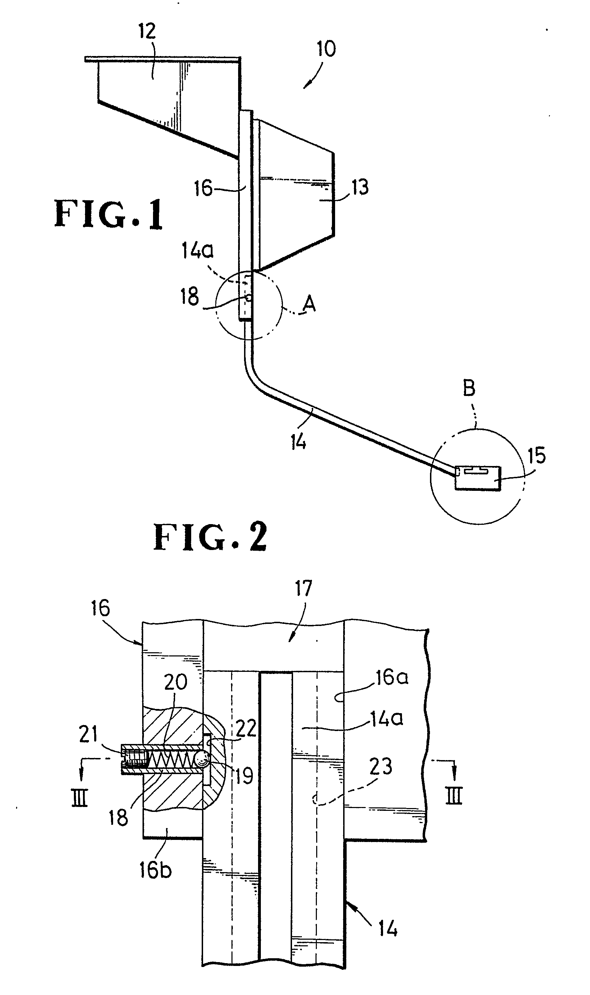

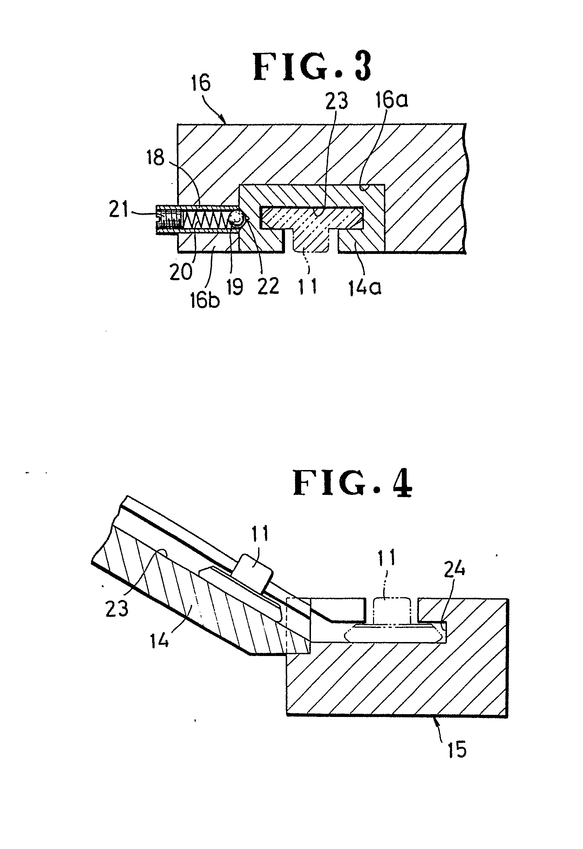

Figure 1 shows an apparatus 10 for delivering parts 11 (Figures 3 and 4), such as hooks and buttons, to a garment (not shown) for attachment thereto. The apparatus 10 generally comprises a hopper 12 containing the parts 11, a feeder 13 for regulating the feeding of the parts 11, and a chute 14 for guiding the parts 11 from the hopper 12 down to a terminal guide 15 from which the individual parts 11 are delievered to the garment.

The hopper 12 includes an outlet port 16 having a first channel 17 (only a free end portion thereof is shown in Figure 2) through which the parts 11 are discharged, during which time the parts 11 are arranged by the feeder 13 so as to be fed in a line.

As best shown in Figures 2 and 3, the chute 14 has an upper end portion constituting a plug 14a to be connected to the outlet port 16. The free end portion of the outlet port 16 constitutes a socket 16a for receiving the plug 14a tightly, as described below.

A sleeve 18 is supported by a wall 16b of the socket 16a and extends perpendicularly thereto. A steel ball 19 is enclosed in the sleeve 18 so as not to be removed out of the sleeve 18 from an inner end thereof. A compression spring 20 is also enclosed in the sleeve 18 to urge the ball 19 normally to project into the socket 16a. A spring retainer or stop 21 is axially adjustably mounted in the sleeve 18 at an outer end thereof. The retainer 21 is preferably in the form of a headless screw threadedly extending in the sleeve 18. Thus the ball 19 is movable between a first position in which the ball 19 projects from the wall 16b into the socket 16a (FIGS. 2 and 3), and a second position in which the ball 19 is retracted in the wall 16b out of the socket 16a (not shown).

The plug 14a has a locking recess 22 for receiving the ball 19 when the plug 14a is inserted in the socket 16a in position for correct connection. The locking recess 22 extends parallel to the axis of the plug 14a for a relatively short length (FIG. 2) and has a triangular cross section (Figure 3).

The chute 14 has a second guide channel 23 extending therealong and communicatable with the first guide channel 17 of the outlet port 16 when the plug 14a is filled in the socket 16a. The terminal guide 15 is connected to a lower end of the chute 14 and has a third guide channel 24 communicatable with the second guide channel 23 of the chute 14. Having the chute 14 attached to the outlet port 16 of the hopper 12, the first, second and third guide channels 17, 23, 24 are combined into a single lengthened guide channel. As the parts 11 are delivered from the hopper 12 to a garment (not shown), they slide down all the way along the combined guide channel 17, 23, 24. In case where the parts 11 are to be delivered from the chute 14 directly to a garment, the terminal guide 15 may be omitted.

To attach the chute 14 to the outlet port 16 of the hopper 12, the plug 14a of the chute 14 is simply inserted axially into the socket 16a of the outlet port 16, pushing the ball 19 sideways into the wall 16b of the socket 16a, until the ball 19 is in registry with the locking recess 22 of the plug 14a. In registry with the locking recess 22, the ball 19 projects into the locking recess 22, thus holding the plug 14a in position with respect to the socket 16a under the biasing force of the spring 20. Thus the attachment of the chute 14 to the hopper 12 has been completed. For detachment, the chute 14 is simply pulled downwardly (or axially) away from the outlet port 16 until the plug 14a is removed out of the socket 16a, at which time the ball 19 is pushed by the plug 14a into the wall 16b against the biasing force of the spring 20.

With this arrangement, the chute 14 can be attached to, or detached from, the hopper 12 with a single simple snap action.

CLAIMS:

1. A mechanism for detachably connecting a chute (14) to a hopper (12) having an outlet port (16) for delivering parts (11) therefrom, said mechanism comprising: a plug (14a) constituted by one end portion of said chute (14); a socket (16a) constituted by a free end portion of said outlet port (16) of said hopper (12) for receiving said plug (14a) tightly; a ball (19) carried by a wall (16b) of said socket (16a) and movable between a first position in which said ball (19) projects from said wall (16b) into said socket (16a), and a second position in which said ball (19) is retracted into said wall (16b) out of said socket (16a); a spring (20) normally urging said ball (19) to said first position; and said plug (14a) having a locking recess (22) for receiving said ball (19) when said plug (14a) is inserted in said socket (16a) in position for correct connection.

2. A mechanism according to claim 1, including a sleeve (18) enclosing said ball (19) and said spring (20), said sleeve (18) being supported by said wall (16b) of said socket (16a) and extending perpendicularly thereto.

3. A mechanism according to claim 2, including a spring retainer (21) axially adjustably mounted in said sleeve (18) at one end opposite to said ball (19).

4. A mechanism according to claim 1, said locking recess (22) extending parallel to the axis of said plug (14a) and having a triangular cross section.

# FIG.1

12
10
16
13
14a
18
A
B
14
15

# FIG.2

16
17
16a
20
14a
21
22
III
18
19
III
16b
23
14

# FIG.3

# FIG.4

European Patent Office

EUROPEAN SEARCH REPORT

## DOCUMENTS CONSIDERED TO BE RELEVANT

EP 82101226.7

| Category | Citation of document with indication, where appropriate, of relevant passages | Relevant to claim | CLASSIFICATION OF THE APPLICATION (Int. Cl. ³) |
|---|---|---|---|
| A | <u>FR - A1 - 2 323 051</u> (SAUVAGNAT & CIE) <br><br> * Fig. 1-3 * <br><br> -- | 1 | B 65 G 11/00 <br> F 16 B 21/00 |
| A | VDI-RICHTLINIEN 2253, Blatt 1, Einfach-Rastgesperre, Jahrgang 72 Seite 17 <br><br> * Einfach-Rastgesperre, unmittelbar * <br><br> ---- | 1 | |

TECHNICAL FIELDS SEARCHED (Int. Cl. ³)

A 41 H

B 65 B

B 65 G

F 16 B

The present search report has been drawn up for all claims

| Place of search | Date of completion of the search | Examiner |
|---|---|---|
| VIENNA | 24-06-1983 | PISSENBERGER |